(19) Europäisches Patentamt
European Patent Office
Office européen des brevets

(11) Veröffentlichungsnummer: **0 206 998 B1**

(12) # EUROPÄISCHE PATENTSCHRIFT

(45) Veröffentlichungstag der Patentschrift: **17.03.93**

(21) Anmeldenummer: **86810272.4**

(22) Anmeldetag: **16.06.86**

(51) Int. Cl.5: **C10M 133/08**, C10M 135/24, C10M 159/18, C07C 323/00, C07C 215/00, C07F 15/04, C07F 1/00, C07F 3/00, C08K 5/00, C08K 5/17

(54) **Schmiermittelzusammensetzungen, neue Glucamin-Derivate und diese enthaltende Komplexverbindungen.**

(30) Priorität: **21.06.85 CH 2648/85**
**02.07.85 CH 2818/85**

(43) Veröffentlichungstag der Anmeldung:
**30.12.86 Patentblatt 86/52**

(45) Bekanntmachung des Hinweises auf die Patenterteilung:
**17.03.93 Patentblatt 93/11**

(84) Benannte Vertragsstaaten:
**BE DE FR GB IT**

(56) Entgegenhaltungen:
**GB-A- 2 172 284**
**US-A- 2 856 363**
**US-A- 4 134 846**
**US-A- 4 147 641**

(73) Patentinhaber: **CIBA-GEIGY AG**
**Klybeckstrasse 141**
**CH-4002 Basel(CH)**

(72) Erfinder: **Wirth, Hermann O., Dr.**
**Lessingstrasse 24**
**W-6140 Bensheim 3(DE)**
Erfinder: **Friedrich, Hans-Helmut**
**Am Rauhenstein 8**
**W-6147 Lautertal 2(DE)**

EP 0 206 998 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue Glucamin-Derivate, mit Glucamin-Derivaten ausgerüstete Schmiermittel und Hydraulikflüssigkeiten sowie solche Glucamin-Derivate enthaltende Komplexverbindungen und deren Verwendung als Kunststoff- und Schmiermitteladditive.

Glucamin-Derivate und deren Herstellung sind z.B. in der US-A-4,281,201 und den JP-A-79/135,233 und 79/163,829 als Zusätze für kosmetische Zusammensetzungen beschrieben. Glucamin-Derivate als Additive für Schmiermittel sind jedoch noch nicht bekannt.

An Additive für Schmiermittel werden hohe Anforderungen gestellt. So muss vor allem die Stabilität der Schmiermittel gegen oxidativen Abbau bei hohen Temperaturen verbessert werden, die Lasttrage-Eigenschaften erhöht werden, sowie deren Verwendbarkeit bei hohen Temperaturen in Gegenwart von korrosionsempfindlichen Werkstoffen sichergestellt werden. Ein sehr wesentlicher Faktor ist schliesslich auch die Verbesserung der Verschleissschutz-Eigenschaften dieser Schmiermittel.

Es ist gelungen, Verbindungen zu entwickeln, welche Schmiermitteln ausgezeichnete Hochdruck- und insbesondere Verschleissschutz-Eigenschaften vermitteln.

Die vorliegende Erfindung betrifft Zusammensetzungen, enthaltend ein Schmiermittel oder eine Hydraulikflüssigkeit und wenigstens eine Verbindung der allgemeinen Formel I

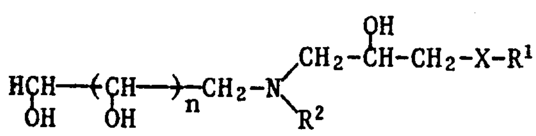

(I),

worin n 2, 3 oder 4 ist, X -S-, -O-, -O-CO- oder $-CH_2-$ ist, $R^1$ $C_1$-$C_{22}$-Alkyl, $C_5$-$C_6$-Cycloalkyl oder Phenyl bedeutet und $R^2$ Wasserstoff, $C_1$-$C_8$-Alkyl, durch eine OH-Gruppe substituiertes $C_2$-$C_4$-Alkyl oder eine Gruppe $-CH_2-CH(OH)-CH_2-X-R^1$ ist, worin X und $R^1$ die angegebene Bedeutung haben.

Hierbei hat X vorzugsweise die Bedeutung -O-, $-CH_2-$ oder -S- und steht besonders bevorzugt für -S-. Bedeutet X -O-CO-, so ist das Carbonyl-C-Atom mit dem Rest $R^1$ verbunden.

$R^1$ in der Bedeutung $C_1$-$C_{22}$-Alkyl stellt einen geradkettigen oder verzweigten $C_1$-$C_{22}$-Alkylsubstituenten dar, der beispielsweise die Bedeutung Methyl, Ethyl, n-Propyl, Isopropyl, n-, sec.-, tert.-Butyl, Pentyl, 1-Methylpentyl, n-Hexyl, 2-Ethylhexyl (i-Octyl), n-Heptyl, 1-Methylheptyl, geradkettiges oder verzweigtes Octyl, Nonyl, Decyl, Undecyl, Dodecyl, Tridecyl, Tetradecyl, Pentadecyl, Hexadecyl, Octadecyl, Eicosyl oder Docosyl hat. Besonders bevorzugt sind tertiäre Alkylreste.

$R^1$ steht vorzugsweise für geradkettiges oder verzweigtes $C_1$-$C_4$-Alkyl und besonders bevorzugt für $C_5$-$C_{18}$-Alkyl, insbesondere ist $C_8$-$C_{12}$-Alkyl bevorzugt.

In einer besonders bevorzugten Ausführungsform der erfindungsgemässen Zusammensetzungen bedeutet $R^1$ in Verbindungen der Formel I tert.-Nonyl oder tert.-Dodecyl, wobei z.B. unter tert.-Dodecyl solch ein Rest verstanden werden soll, wie er für tertiäres Dodecylmercaptan in "Ullmanns Enzyklopädie der technischen Chemie, 4. Auflage, Band 23, Seite 181-182, Verlag Chemie, Weinheim" beschrieben ist, und somit X an ein tertiäres Kohlenstoffatom gebunden ist.

Kommen in einem Molekül der Formel I die Reste $R^1$ und X mehrfach vor, so können diese Reste verschieden oder gleich, bevorzugt gleich, sein.

Bedeutet $R^2$ $C_1$-$C_8$-Alkyl, so handelt es sich zum Beispiel um Methyl, Ethyl, Isopropyl, n-Propyl, n- oder sec.-Butyl, 2-Ethylhexyl oder n-Octyl, bevorzugt um Methyl oder Ethyl. Ist $R^2$ durch eine OH-Gruppe substituiertes $C_2$-$C_4$-Alkyl, so handelt es sich z.B. um 2-Hydroxyethyl, 2-Hydroxypropyl, 3-Hydroxypropyl oder 2-Hydroxybutyl, bevorzugt um 2-Hydroxyethyl. Ausserdem stellt $R^2$ bevorzugt die Gruppe $-CH_2-CH(OH)-CH_2-X-R^1$ dar, wobei für X und $R^1$ die oben geschilderten Bedeutungen gelten.

n ist eine ganze Zahl 2 oder 3 und bevorzugt 4.

Bevorzugt werden Zusammensetzungen, enthaltend ein Schmiermittel oder eine Hydraulikflüssigkeit und wenigstens eine Verbindung der Formel I, worin X -S-, $-CH_2-$ oder -O- ist, $R^1$ geradkettiges oder verzweigtes $C_8$-$C_{12}$-Alkyl darstellt, $R^2$ für Methyl, Ethyl oder die Gruppe $-CH_2-CH(OH)-CH_2-X-R^1$ steht, wobei X und $R^1$ die angegebene Bedeutung haben, und n 4 ist.

Die Verbindungen der Formel I sind teilweise neu. Ein weiterer Gegenstand der Erfindung sind daher Verbindungen der Formel Ia

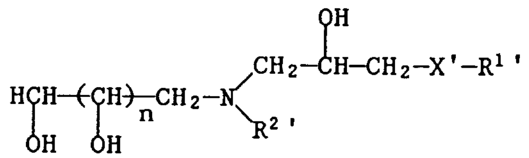 (Ia),

worin n 2, 3 oder 4 ist, X' die Bedeutung -S-, -O- oder -O-CO- hat, R1' für $C_1$-$C_{22}$-Alkyl steht und R2' eine Gruppe $-CH_2-CH(OH)-CH_2-X'-R^{1'}$, worin X' und R1' die angegebene Bedeutung haben, oder, falls X' -S- bedeutet, auch Wasserstoff, $C_1$-$C_8$-Alkyl oder durch eine OH-Gruppe substituiertes $C_2$-$C_4$-Alkyl darstellt. Dabei ist X' bevorzugt -S-. R2' steht insbesondere für eine Gruppe der Formel $-CH_2-CH(OH)-CH_2-X'-R^{1'}$.

Beispiele für Verbindungen der Formel I sind:

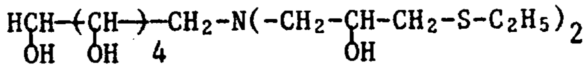

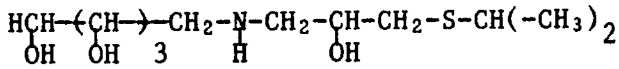

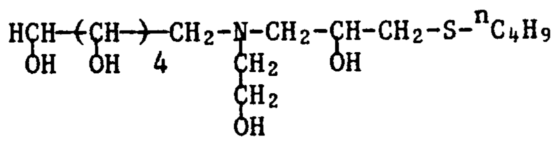

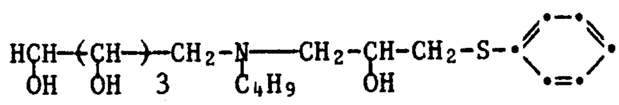

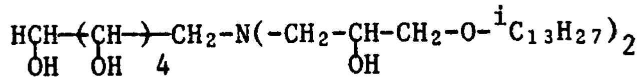

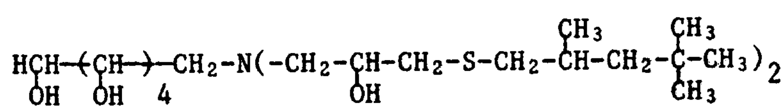

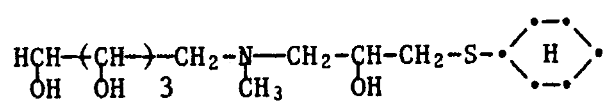

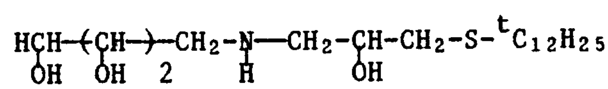

Die Verbindungen der Formel I können in an sich bekannter Weise, zum Beispiel durch Umsetzung von geeigneten Glucaminen der Formel III

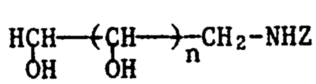 (III),

worin n die angegebene Bedeutung hat und Z Wasserstoff, $C_1$-$C_8$-Alkyl oder durch eine OH-Gruppe substituiertes $C_2$-$C_4$-Alkyl bedeutet, mit Glycidylverbindungen der Formel

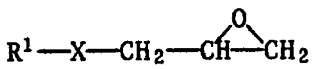 (IV),

worin X und $R^1$ die genannte Bedeutung haben, erhalten werden. Im Fall $Z = H$ werden pro Mol III mindestens 2 Mol IV eingesetzt, für $Z \neq H$ zweckmässig etwa äquimolare Mengen.

Die Glucamine der Formel III können in an sich bekannter Weise, z.B. durch Reaktion eines geeigneten Monosaccharids mit einem geeigneten primären Amin und nachfolgender Reduktion des Umsetzungsproduktes erhalten werden. Die Glycidylverbindungen der Formel IV sind bekannt oder können nach üblichen Verfahren leicht erhalten werden.

Bei den Verbindungen der Formel I handelt es sich im allgemeinen um flüssige bis viskose Flüssigkeiten. Einzelne Verbindungen der Formel I sind hochviskos bzw. harzartige oder teerartige Massen und können im Bedarfsfall zur besseren Handhabung hochkonzentriert in Wasser oder einem geeigneten Grundöl angewendet werden.

Mit den erfindungsgemässen Glucamin-Derivaten werden Schmiermittel-Additive bereitgestellt, die sich durch gute Hochdruck- und insbesondere Verschleissschutz-Eigenschaften auszeichnen. Die Verbindungen der Formel I wirken schon in sehr geringen Mengen in Schmiermitteln und Hydraulikflüssigkeiten, wobei eine ausreichende Löslichkeit im jeweiligen Substrat Voraussetzung ist. So zeigen mineralische und synthetische Schmieröle, sowie deren Gemische, und Hydraulikflüssigkeiten, welche mit z.B. 0,01 bis 5 Gew.-%, vorzugsweise 0,05 bis 3 Gew.-%, bezogen auf das Schmiermittel, einer Verbindung der Formel I ausgestattet sind, ausgezeichnete Eigenschaften, insbesondere ein ausgezeichnetes Hochdruckverhalten welche durch reduzierte Abnutzungserscheinungen der zu schmierenden Teile deutlich werden. Die in Frage kommenden Schmiermittel sind dem Fachmann geläufig, und z.B. in "Schmierstoffe und verwandte Produkte" (Verlag Chemie, Weinheim, 1982) beschrieben.

Besonders geeignet sind die Zusätze der Formel I für den Einsatz in nichtautomatischen, und insbesondere in automatischen Getrieben von Automobilen. Ausserdem können sie hervorragende Dienste in Motorenölen, Diesellokomotivmotorenölen oder Turbinenölen leisten.

Die Schmierstoffe können zusätzlich andere Additive enthalten, die zugegeben werden, um die Grundeigenschaften von Schmierstoffen noch weiter zu verbessern; dazu gehören: Antioxidantien, Metallpassivatoren, Rostinhibitoren, Viskositätsindex-Verbesserer, Stockpunkterniedriger, Dispergiermittel, Detergentien, Hochdruck-Zusätze und Antiverschleiss-Additive.

Beispiele für phenolische Antioxidantien

1. Alkylierte Monophenole

2,6-Di-tert-butyl-4-methylphenol
2,6-Di-tert-butylphenol
2-tert-butyl-4,6-Dimethylphenol
2,6-Di-tert-butyl-4-ethylphenol
2,6-Di-tert-butyl-4-ethylphenol
2,6-Di-tert-butyl-4-n-butylphenol
2,6-Di-tert-butyl-4-sec-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert-butyl-4-methoxymethylphenyl
o-tert-Butylphenol

2. Alkylierte Hydrochinone

2,6-Di-tert-butyl-4-methoxyphenol
2,5-Di-tert-butyl-hydrochinon
2,5-Di-tert-amyl-hydrochinon
2,6-Diphenyl-4-octadecyloxyphenol

3. Hydroxylierte Thiodiphenylether

2,2'-Thio-bis-(6-tert-butyl-4-methylphenol)
2,2'-Thio-bis-(4-octylphenol)
4,4'-Thio-bis-(6-tert-butyl-3-methylphenol)
4,4'-Thio-bis-(6-tert-butyl-2-methylphenol)

4. Alkyliden-Bisphenole

2,2'-Methylen-bis-(6-tert-butyl-4-methylphenol)
2,2'-Methylen-bis-(6-tert-butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert-butylphenol)
2,2'-Ethyliden-bis-(4,6-Di-tert-butylphenol)
2,2'-Ethyliden-bis-(6-tert-butyl-4-sec-butylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert-butylphenol)
4,4'-Methylen-bis-(6-tert-butyl-2-methylphenol)
1,1-Bis-(5-tert-butyl-4-hydroxy-2-methylphenyl)-butan
2,6-Di-(3-tert-butyl-5-methyl-2-hydroxybenzyl)-4-methylphenol
1,1,3-Tris-(5-tert-butyl-4-hydroxy-2-methylphenyl)-3-n-dodecylmercaptobutan
Ethylenglycol-bis-[3,3-bis-(3'-tert-butyl-4'-hydroxyphenyl)-butyrat]
Di-(3-tert-butyl-4-hydroxy-5-methylphenyl)-dicyclopentadien
Di-[2-(3'-tert-butyl-2'-hydroxy-5'-methyl-benzyl)-6-tert-butyl-4-methyl-phenyl]-terephthalat.

5. Benzylverbindungen

1,3,5-Tri-(3,5-di-tert-butyl-4-hydroxybenzyl)-2,4,6-trimethylbenzol
Di-(3,5-di-tert-butyl-4-hydroxybenzyl)-sulfid
3,5-Di-tert-butyl-4-hydroxybenzyl-mercaptoessigsäure-isooctylester
Bis-(4-tert-butyl-3-hydroxy-2,6-dimethylbenzyl)-dithiol-terephthalat
1,3,5-Tris-(3,5-di-tert-butyl-4-hydroxybenzyl)-isocyanurat
1,3,5-Tris-(4-tert-butyl-3-hydroxy-2,6-dimethylbenzyl)-isocyanurat
3,5-Di-tert-butyl-4-hydroxybenzyl-phosphonsäure-dioctadecylester
3,5-Di-tert-butyl-4-hydroxybenzyl-phosphonsäure-monoethylester Calcium-salz.

6. Acylaminophenole

4-Hydroxy-laurinsäureanilid
4-Hydroxy-stearinsäureanilid
2,4-Bis-octylmercapto-6-(3,5-di-tert-butyl-4-hydroxyanilino)-s-triazin
N-(3,5-di-tert-butyl-4-hydroxyphenyl)-carbaminsäureoctylester.

7. Ester der B-(3,5-Di-tert-butyl-4-hydroxyphenyl)-propionsäure

mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

8. Ester der β-(5-tert-butyl-4-hydroxy-3-methylphenyl)-propionsäure

mit ein- oder mehrwertigen Alkoholen, wie z.B. mit

| | |
|---|---|
| Methanol<br>Octadecanol<br>1,6-Hexandiol<br>Neopentylglycol<br>Thiodiethylenglycol | Diethylenglycol<br>Triethylenglycol<br>Pentaerythrit<br>Tris-hydroxyethyl-isocyanurat<br>Di-hydroxyethyl-oxalsäurediamid |

9. Amide der β-(3,5-Di-tert-butyl-4-hydroxyphenyl)-propionsäure.

wie z.B.
N,N'-Di-(3,5-di-tert-butyl-4-hydroxyphenylpropionyl)-hexamethylendiamin
N,N'-Di-(3'5-di-tert-butyl-4-hydroxyphenylpropionyl)-trimethylendiamin
N,N'-Di-(3,5-di-tert-butyl-4-hydroxyphenylpropionyl)-hydrazin.

Beispiele für aminische Antioxidantien:

N,N'-Di-isopropyl-p-phenylendiamin
N,N'-Di-sec-butyl-p-phenylendiamin
N,N'-Bis(1,4-dimethyl-pentyl)p-phenylendiamin
N,N'-Bis(1-ethyl-3-methylpentyl)-p-phenylendiamin
N,N'-Bis(1-methyl-heptyl)-p-phenylendiamin
N,N'-Diphenyl-p-phenylendiamin
N,N'-Di-(naphthyl-2)-p-phenylendiamin
N-Isopropyl-N'-phenyl-p-phenylendiamin
N-(1,3-Dimethyl-butyl)-N'-phenyl-p-phenylendiamin
N-(1-Methyl-heptyl)-N'-phenyl-p-phenylendiamin
N-Cyclohexyl-N'-phenyl-p-phenylendiamin
4-(p-Toluol-sulfonamido)-diphenylamin
N,N'-Dimethyl-N,N'-di-sec-butyl-p-phenylendiamin
Diphenylamin
4-Isopropoxy-diphenylamin
N-Phenyl-1-naphthylamin
N-Phenyl-2-naphthylamin
octyliertes Diphenylamin
4-n-Butylaminophenol
4-Butyrylamino-phenol
4-Nonanoylamino-phenol
4-Dodecanoylamino-phenol
4-Octadecanoylamino-phenol
Di-(4-methoxy-phenyl)-amin
2,6-Di-tert-butyl-4-dimethylamino-methyl-phenol
2,4'-Diamino-diphenylmethan
4,4'-Diamino-diphenylmethan
N,N,N',N'-Tetramethyl-4,4'-diamino-diphenylmethan
1,2-Di-[(2-methyl-phenyl)-amino]-ethan
1,2-Di-(phenylamino)-propan
(o-Tolyl)-biguanid
Di-[4-(1',3'-dimethyl-butyl)phenyl)amin
tert-octyliertes N-Phenyl-1-naphthylamino
Gemisch aus mono- und dialkylierten tert-Butyl-/tert-Otyldiphenylaminen.

Beispiele für Metallpassivatoren sind:

für Kupfer, z.B.:
Benztriazol, Tetrahydrobenztriazol, 2-Mercaptobenzthiazol, 2,5-Dimercaptothiadiazol, Salicyliden-propylendiamin, Salze von Salicylaminoguanidin.

Beispiele für Rost-Inhibitoren sind:

a) Organische Säuren, ihre Ester, Metallsalze und Anhydride, z.B.:
N-Oleoyl-sarcosin, Sorbitan-mono-oleat, Blei-naphthenat, Dodecenylbernsteinsäure-anhydrid, Alkenylbernsteinsäure-Halbester, 4-Nonylphenoxy-essigsäure.
b) Stickstoffhaltige Verbindungen, z.B.:
I. Primäre, sekundäre oder tertiäre aliphatische oder cycloaliphatische Amine und Amin-Salze von organischen und anorganischen Säuren, z.B. öllösliche Alkylammoniumcarboxylate.
II. Heterocyclische Verbindungen z.B.:
Substituierte Imidazoline und Oxazoline.
c) Phosphorhaltige Verbindungen, z.B.:
Aminsalze von Phosphorsäurepartialestern.
d) Schwefelhaltige Verbindungen, z.B.:
Barium-dinonylnaphthalin-sulfonate, Calciumpetroleum-sulfonate.

Beispiele für Viskositätsindex-Verbesserer sind z.B.

Polymethacrylate, Vinylpyrrolidon/Methacrylat-Copolymere, Polybutene, Olefin-Copolymere, Styrol/Acrylat-Copolymere.

Beispiele für Stockpunkterniedriger sind z.B.:

Polymethacrylat, alkylierte Naphthalinderivate.

Beispiele für Dispergiermittel/Tenside sind z.B.:

Polybutenylbernsteinsäure-imide, Polybutenylphosphonsäurederivate, basische Magnesium-, Calcium-, und Bariumsulfonate und -phenolate.

Beispiele für Verschleissschutz-Additive sind z.B.:

Schwefel und/oder Phosphor und/oder Halogen enthaltende Verbindungen, wie geschwefelte pflanzliche Oele, Zinkdialkyldithiophosphate, Tritolyl-phosphat, chlorierte Paraffine, Alkyl- und Aryldisulfide.

Die Verbindungen der Formel I eignen sich ausserdem hervorragend als amphipolare Liganden zur lipophilen Modifizierung (Komplexierung) von an sich hydrophilen Metall- und Halbmetallsalzen, -hydroxiden und -oxiden und von Protonensäuren. Sie können daher erfindungsgemäss dazu verwendet werden, an sich hydrophile, insbesondere anorganische, Verbindungen für die Anwendung in hydrophoben Systemen löslich zu machen.

Aus der DE-A-2 838 473 und der DE-A-2 739 312 sind Komplexverbindungen aus Metall- und Halbmetallsalzen sowie Protonensäuren von bestimmten Di- und Triolen bekannt, durch die die genannten Salze bzw. Säuren ebenfalls lipophil modifiziert werden. Durch Komplexierung solcher hydrophiler Verbindungen mit den Verbindungen der Formel I werden besonders stabile und vielseitig anwendbare Komplexverbindungen erhalten. Die Komplexe sind überraschenderweise noch besser löslich in hydrophoben Systemen und es werden zur lipophilen Modifizierung weniger amphipolare Liganden benötigt als bei den bekannten Komplexen.

Die vorliegende Erfindung betrifft daher auch Komplexverbindungen eines Metallsalzes, Halbmetallsalzes, -hydroxides oder -oxides oder einer Protonensäure der allgemeinen Formel II oder deren Mischungen

$$M_n^m \cdot X_m^n \cdot pY \cdot qZ \qquad (II)$$

worin
M ein m-wertiges Kation eines Metalls oder Halbmetalls oder ein Metalloxy- oder Metalldioxykation oder ein

Proton darstellt,
X ein n-wertiges Anion einer n-basischen anorganischen Protonensäure oder einer n-basischen organischen Säure aus der Gruppe der aliphatischen und cycloaliphatischen Carbonsäuren mit bis zu 8 C-Atomen, die durch Halogen- und/oder Hydroxylgruppen substituiert sein können, der aromatischen Mono-, Di- und Tricarbonsäuren, die durch Hydroxyl-, Halogen- und/oder Nitrogruppen substituiert sein können, der organischen Sauerstoffsäuren des Phosphors und Schwefels, der organischen Thiosäuren des Phosphors und aus der Gruppe der Merkaptane, bedeutet, wobei die anorganische oder organische Säure einen $pK_s$-Wert von höchstens 15,8 und, wenn M ein Proton ist, von höchstens 11 aufweist, oder $X^n$ -OH oder O ist,
Y Wasser oder ein neutrales organisches Molekül ist, das von dem Kation oder auch Anion koordinativ gebunden werden kann,
Z eine Verbindung der Formel I bedeutet,
p für einen Wert von 0 bis 2,
q für einen Wert von 1 bis 8,
m für eine ganze Zahl von 1 bis 6 und
n für eine ganze Zahl von 1 bis 4 stehen.

Das m-wertige Kation leitet sich vorzugsweise von einem Metall der Gruppe 1a bis 8a und 1b bis 5b des periodischen Systems der Elemente, den Lanthaniden, Uran, Plutonium oder den Halbmetallen Bor, Silicium, Germanium und Antimon ab. Die Wertigkeit m des Kations ergibt sich aus der Stellung der Elemente im Periodensystem. Als Wertigkeit wird in vorliegender Anmeldung die Anzahl m an Elektronen verstanden, die ein Metall unter Ausbildung eines m-fach geladenen Metalliones abzugeben vermag. Ein Element kann hiebei, wie allgemein bekannt, verschiedene stabile Wertigkeitsstufenausbilden, z.B. kann Zinn in zwei- oder vierwertiger Form, Chrom in 2- oder 3-wertiger Form, oder Kupfer in 1- oder 2-wertiger Form vorliegen. Die Wertigkeit 6 ist zum Beispiel im Wolframhexafluorid verwirklicht. Die Wertigkeit m beträgt vorzugsweise 1 bis 5, insbesondere 1 bis 3.

Besonders bevorzugt leitet sich das Kation von den Elementen Li, Na, K, Be, Mg, Ca, Sr, Ba, Al, Sc, La, Ce, Eu, Ti Zr, Hf, Th, V, Nb, Ta, Cr, Mo, W, U, Mn, Fe, Co, Ni, Rh, Pd, Os, Jr, Pt, Cu, Ag, Au, Zn, Cd, Hg, Sn, Pb, Bi, und den Halbmetallen B, Si, Ge und Sb ab.

Insbesondere leitet sich das Kation von den Metallen Li, Na, K, Mg, Ca, Sr, Ba, Al, Ti, Zr, V, Cr, Mo, W, Mn, Fe, Co, Ni, Cu, Ag, Au, Zn,Cd, Sn, Pb, und Bi und den Halbmetallen B, Si und Sb ab.

Besonders bevorzugt steht M für Wasserstoff, Na, K, Mg, Ca, Sr, Ba, Al, Cr, Mn, Fe, Co, Ni, Cu, Ag, Zn, Cd, Hg, Sn, Pb, B oder Si, vor allem für Ca, Ba, Cu, Ni, Fe oder Co.

Einige Metalle können auch Metalloxokationen bilden, die ein oder zwei Sauerstoffatome enthalten. Unter diesen sind Titanyl, Vanadyl, Zirkonyl und Uranyl bevorzugt. Erwähnt sei noch das 4-wertige Kation Wolframyl und die einwertigen Kationen Antimonyl und Bismutyl.

Die anorganische Säure und die zuvor definierten organischen Säuren, von denen sich das Anion ableitet, haben vorzugsweise eine $pK_s$-Wert von höchstens 10, insbesondere höchstens 4 und er beträgt bei den stärksten Säuren etwa bis -10. Wie allgemein bekannt, ist der pKs-Wert, der ein Mass für die Säurestärke ist, für Protolyte in wässrigen Systemen definiert als der negative dekadische Logarithmus der Gleichgewichtskonstante der Protolysereaktion. Die gleiche Definition gilt auch für die $pK_b$-Werte, die ein Mass für die Basenstärke sind. Es wurde gefunden, dass jene erfindungsgemässen chelatisierten Verbindungen der Formel II besonders stabil sind, die sich von starken Säuren ableiten. Die obere Grenze des $pK_s$-Wertes von 15,8 schliesst noch Wasser als schwache Säure ein. Als Rest X wird ausserdem der Oxidrest =O verstanden.

X ist das Anion einer n-basischen, wie zuvor definierten anorganischen oder organischen Protonensäure sowie der Rest =O. Diese Definition umfasst auch Protonensäuren, die in freier Form nicht existent sind, sondern nur in Form ihrer Salze, z.B. den Ammoniumsalzen. Die Basizität n gibt die Anzahl der durch die Abspaltung von n Protonen im Anion gebildeten negativen Ladungen an. Neben den Anionen einbasischer Säuren wie Salzsäure sind auch Anionen vierbasischer Säuren bekannt, wie z.B. Silikat oder Titanat und n bedeutet daher ganze Zahlen von 1 bis 4. X umfasst auch polymere Anionen, z.B. jene der Silikate, Titanate, Phosphate, Arsenate, Zirkonate, Vanadate, Borate, Molybdate, Wolframate und Antimonate.

Das Anion X leitet sich bevorzugt von anorganischen Protonensäuren aus der Gruppe der Halogen- und Pseudohalogenwasserstoffsäuren und Selenwasserstoffsäure, der anorganischen Sauerstoffsäuren oder Thiosäuren und der anorganischen Komplexsäuren ab. Unter den Halogen- bzw. Pseudohalogenwasserstoffsäuren sind zu nennen: HF, HCl, HBr, HJ, HCN, HCNO, HCNS und $HN_3$.

Die anorganischen Sauerstoffsäuren leiten sich vorzugsweise von den Elementen C, N, P, As, S, Se, Cl, Br und J oder von den amphoteren Elementen und den Halbmetallen ab. Die anorganische Thiosäure ist bevorzugt $H_2S$ oder leitet sichs von den Elementen C, V, Mo, W, Sn, P, As, Sb, und S ab.

Als Beispiele für Anionen der Sauerstoffsäuren der genannten Elemente sind zu nennen: Carbonat, Hydrogencarbonat, Nitrit, Nitrat, Hypophosphit, Phosphit, Orthophosphat, Polyphosphate wie Diphosphate, Metaphosphate wie Metaphosphat, Trimetaphosphat oder Tetrametaphosphat, Fluorphosphat, Arsenit, Arsenat, Sulfit, Sulfat, Peroxomonosulfat, Peroxodisulfat, Thiosulfat, Dithionat, Dithionat, Pyrosulfit, Pyrosulfat, Polythionat, Fluorsulfat, Selenit, Selenat,Tellurit, Tellurat, Hypochlorit, Chlorit, Chlorat, Perchlorat, Bromit, Bromat, Jodat, Perjodat.

Als Anionen von Thiosäuren ist neben Sulfid zu nennen: Polysulfide wie Disulfid,Thiocarbonat, Thioncarbonat, Thiothioncarbonat, Dithioncarbonat, Trithiocarbonat, Thiovanadat, Thiomolybdat, Thiowolframat, Thiostannat, Thioantimonat, Thioarsenat, Thioarsenit, Thioantimonit, Trithiophosphat, Tetrathiophosphat und Trithiophosphit.

Als Anionen von Sauerstoffsäuren der amphoteren Elemente und der Halbmetalle sind zu nennen: Borat, Metaborat, Silikat, Metasilikat, Germanat, Antimonit, Antimonat, Aluminat, Titanat, Zirkonat, Vanadat, Chromat, Dichromat, Molybdat, Wolframat, Manganat, Permanganat, Stannit und Stannat.

Unter Anionen anorganischer Komplexsäuren werden solche verstanden, die aus einem zentralen Metall- oder Halbmetallatom und komplexbildenden Acidoliganden aufgebaut sind. Geeignete Metalle bzw. Halbmetalle sind z.B. B, Si, Ge, As, Sb, Al, Ti, Zr, V, Nb, Ta, Cr, Mo, W, Mn, Zn, Cd, Fe, Co, Ni, Ru, Rh, Pd, Os, Ir, Pt, Cu, Ag, Au, Sn, Pb und Bi. Geeignete Acidoliganden sind zum Beispiel die Halogenide, insbesondere Fluorid und Chlorid, die Pseudohalogenide, besonders Cyanid und Rhodanid, die CO-Gruppe und Oxalat. Diese Komplexanionen gehörten hauptsächlich den Typen $[MX'_4]^n$, $[MX'_5]^n$ und $[MX'_6]^n$ an, worin M das Metall- oder Halbmetallion, X' der Acidoligand und n die Basizität (negative Ladung) sind, die sich aus der Wertigkeit des Metalles oder Halbmetalles und der Ladung des Acidoliganden ergeben. Es sei noch erwähnt, dass unter den vielen Komplexanionen auch mehrkernige bekannt sind. Beispiele sind: Tetrafluoroborat, Hexafluorosilikat, Hexafluoroarsenat, Hexafluoroantimonat, Pentafluoroantimonat (III), Hexafluorophosphat, Tetrafluoroaluminat, Hexafluoroaluminat, Hexafluorotitanat, Hexafluoromolybdat oder -wolframat, Hexafluorochromat (III), Hexafluoroferrat, Hexafluorokobalat, Hexaflouroplatinat, Tetrafluorozinkat, Hexafluorostannat, Hexafluoroplumbat, Hexafluoromanganat, Hexafluororhodinat, Hexachloroiridiumat, Hexafluorotrntalat- oder niobat, Tetrachloroaluminat, Hexachlorotitanat, Hexachlorovanadat, Tetrachlorovanadat, Hexachlorochromat, Hexachloromanganat, -molybdat und -wolframat, Hexachloroferrat, Tetrachloronikkelat, Hexajodotechnat, Hexachlororehnat, Hexachlororhutenat, Hexachloroosmat, Hexachlorostannat, Hexachloroplumbat, Hexachloroantimonat, Hexachlorobismutat, Tetrabromocadmiumat, Tetracyanozinkat, Tetrachloro, -bromo oder -jodomercurat, Tetracyanomerkurat, Tetrathiocyanatomercurat, Hexacyanovanadat, Trioxalatovanadat, Hexacyanochromat, Trioxalatochromat, Pentacyanonitrosochromat, Hexacyanomanganat, Hexathiocyanatomanganat, Trioxalatomanganat, Hexacyanoferrat, Tetracyanocobaltat, Tetracyanonickelat, Tetracyanocuptrat, Tetraoxalatozirkonat, Hexarhodanomolybdat, Octacyanomolybdat, Octacyanowolframat, Octacyanorehnat, Hexacyanoplatinat, Hexacyanoosmat, Tetracyanopalladiumat, Pentacarbonylmanganat, Tetracarbonylferrat, Tetracarbonylcobaltat.

Einige der Komplexsäuren sind in freier Form bekannt, andere sind nur in Form ihrer Salze, z.B. der Ammoniumsalze, bekannt.

X kann auch das Anion einer n-basischen aliphatischen oder cycloaliphatischen Carbonsäure mit höchstens 8 C-Atomen, vorzugsweise 1 bis 4 C-Atomen sein, die durch Halogen oder Hydroxyl substituiert sein können. Vorzugsweise ist die Carbonsäure in $\alpha$-Stellung substituiert, insbesondere mit Fluor, Chlor oder Brom, und vorzugsweise ist die Carbonsäure ein- oder zweibasisch. Beispiele sind: Formiat, Acetat, Propionat, Butyrat, Oxalat, Malonat, Succinat, Fumarat, Maleinat, Dithiodipropionat, Hydroxyacetat, Mono-, Di- und Tri-brom- oder -chloroacetat, $\alpha$-Chlorpropionat, $\alpha$-Chlor- oder Brommalonat, 1,2-Dichlor-oder -Dibromsuccinat.

X kann auch das Anion einer aromatischen Carbonsäure mit bevorzugt bis zu höchstens 12 C-Atomen sein, die vorzugsweise aus den Gruppen der 1- bis 3-basischen Phenyl- und Naphthylsäuren ausgewählt ist, und die durch Halogen, insbesondere Flour, Chlor oder Brom oder Nitrogruppen substituiert sein kann. Beispiele sind: Benzoat, Isophthalat, Terephalat, 2-Naphtenat, 2,6-Dinaphtenat, Chlorbenzoat, Nitrobenzoat.

X kann kauch das Anion einer organischen Sauerstoffsäure des Phosphors und Schwefels und einer organischen Thiosäure des Phosphors sein. Es sind dies bevorzugt die Phosphon-, Phosphin-, Thiophosphon-, Thiophosphin-, Sulfon- und Sulfinsäuren. Die Säuren des Phosphors können durch die folgende allgemeine Formel dargestellt werden:

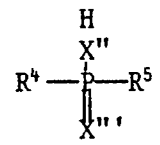

worin $R^4$ einen Kohlenwasserstoffrest aliphatischen oder aromatischen Charakters mit vorzugsweise bisw zu 18, insbesondere bis zu 8 C-Atomen bedeutet, der durch Halogen, insbesondere Fluor oder Chlor substituiert sein kann, X'' und X''' unabhängig für Sauerstoff oder Schwefel stehen und $R^5$ die Gruppe -X''H, oder Wasserstoff ist oder unabhängig die gleiche Bedeutung wie $R^4$ hat.

Die Sauerstoffsäuren des Schwefels können durch die folgende Formel dargestellt werden,

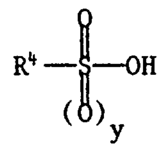

worin $R^4$ die zuvor angegebene Bedeutung hat und y 0 oder 1 ist. $R^4$ kann lineares oder verzweigtes Alkyl, Cycloalkyl, Aryl oder Aralkyl sein, das insbesondere durch Fluor oder Chlor und Alkyl mit 1 bis 6 C-Atomen substituiert sein kann. Das Cycloalkyl ist bevorzugt Cyclohexyl und das Aryl und Aralkyl ist bevorzugt von Phenyl und Naphthyl abgeleitet.

Beispiele sind: Methyl, Aethyl, Propyl, Butyl, Isobutyl, Octyl, Octadecyl, Phenyl, Naphthyl, p-Methylphenyl, Butylphenyl, Dibutylphenyl, Hexylphenyl, Chloromethyl, Chloräthyl, Chlorophenyl, Fluormethyl, Trifluormethyl. X kann auch das Anion eines Merkaptans sein, das bevorzugt bis zu 18, insbeondere bis zu 12 C-Atomen enthält. Das Merkaptan entspricht bevorzugt der Formel

$R^6$-SH

worin $R^6$ lineares oder verzweigtes, gegebenenfalls durch Sauerstoff unterbrochenes Alkyl, Hydroxyalkyl, Alkoxycarbonylalkyl oder gegebenenfalls durch $C_1$-$C_{12}$-Alkyl substituiertes Phenyl ist. Beispiele sind: Methyl, Aethyl, Propyl, Hexyl, Octyl, Decyl, Dodecal, Octadecyl, $\beta$-Hydroxyäthyl, $\beta$-Hydroxypropyl, Alkoxycarbonylmethyl und $\beta$-Alkoxycarbonyläthyl, wie z.B. i-Octoxycarbonylmethyl- oder -äthyl, Phenyl, Nonylphenyl.

Das Anion X kann sich auch von zwei- bis vierbasischen Sauerstoffsäuren ableiten, die partiell verestert sind, bevorzugt mit $C_1$-$C_{12}$-Alkanolen oder Phenolen.

Im Umfang vorliegender Erfindung sind auch Mischungen inbegriffen, die eine erfindungsgemässe Komplexverbindung der Formel II enthalten, worin X ein wie zuvor definiertes Anion darstellt sowie eine oder mehrere Verbindungen der Formel II, worin X für ein Alkoholatanion steht. Das Alkoholatanion kann sich von Alkanolen oder Phenolen mit bevorzugt 1 bis 8 C-Atomen ableiten, wobei dann gleichzeitig X auch ein Alkoholatanion darstellt, das sich von einer komplexierenden Verbindung der Formel I ableitet. Bevorzugt stellt X allein das zuletzt genannte Alkoholatanion dar. Diese Mischungen werden erhalten, indem man ein Metall- oder Halbmetallalkoholat aus den zuvor genannten Alkoholen und einem mindestens zweiwertigen Metall bzw. Halbmetall mit einem Unterschuss einer wasserfreien Verbindung der Formeln $H_nX^n$ oder einem Anmoniumsalz der Formel $A_nX^n$ umsetzt. Bei dieser Umsetzung werden statistische Gemische erhalten, deren Zusammensetzung im wesentlichen durch die Grösse des Unterschusses bestimmt wird. In diesem Gemisch kann gegebenenfalls auch noch nicht umgesetztes Ausgangsprodukt enthalten sein. Sofern X ein Alkanolat- bzw. Phenolatanion bedeuten soll, setzt man ein Umsetzungsprodukt eines Metall- bzw. Halbmetallalkoholates oder Phenolates vorteilhaft mit einem Unterschuss einer komplexierenden Verbindung der Formel I ein.

Einige bevorzugte Reste X sind Oxid, Hydroxyl, Fluorid, Chlorid, Bromid, Jodid, Cyanid, Cyanat, Rhodanid, Azid, Perchlorat, Bromat, Jodat, Perjodat, Permanganat, Sulfid, Hydrogensulfid, Hydrogendifluorid, Nitrit, Nitrat, Sulfit, Sulfat, Thiosulfat, Hydrogensulfat, Fluorsulfat, Hydrogensulfit, Phosphat, Hydrogenphosphat, Phosphit, Hypophosphit, Metaphosphat, Polyphosphat, Monofluorphosphat, Carbonat, Hydrogencarbonat, Thiocarbonat, Thioncarbonat, Dithiocarbonat, Thionthiocarbonat, Trithiocarbonat, Carbamat, Xantogenat, Trithionphosphat, Tetrathiophosphat, Trithiophosphit, Silikat, Metasilikat, Titanat, Borat, Metaborat,

Molybdat, Vanadat, Aluminat, Chromat, Dichromat, Selenat, Wolframat, Arsenit, Arsenat, Antimonat, Stannat, Thioarsenit, Thioarsenat, Thioantimonat, Thiostannat, Thiomolybdat, Thiowolframat, Tetrafluoroborat, Hexafluorosilikat, Hexafluorotitanat, Hexafluoroaluminat, Hexachlorostannat, Hexachloroferrat, Hexacyanoferrat, Octacyanomolybdat, Hexafluoroantimonat, Hexacyanochromat, Tetracyanonickelat, Trioxalatomanganat, Methylphosphonat, Methylphosphinat, Phenylphosphonat, Tosylat, Phenylsulfonat, Methylsulphinat, Formiat, Acetat, Propionat, Benzoat, Terephthalat, Trifluoracetat, Trichloracetat, Chlorbenzoat, Trifluormethylsulphonat, Oxalat, Malonat, Maleinat, Furmarat, Hydroxyacetat, Naphthylsulfonat, Dithiodipropionat, Methylmercaptid, Phenylmercaptid, Octoxycarbonylmethylmercaptid, $\beta$-Hydroxyäthylmercaptid.

Bevorzugte Reste X sind insbesondere Oxid, Hydroxy, Flourid, Bromid, Jodid, Cyanid, Sulfid, Hydrogensulfid, Nitrat, Sulfit, Sulfat, Hydrogensulfat, Phosphat, Phosphit, Hydrogenphosphat, Metaphosphat, Polyphosphat, Carbonat, Hydrogencarbonat, Silikat, Metasilikat, Formiat, Acetat und Oxalat, insbesondere die Anionen Chlorid, Hydrogenphosphat, Phosphat und Sulfat.

In den erfindungsgemässen Verbindungen der Formel II sind besonders die Anionen bevorzugt, die sich von anorganischen Säuren ableiten, die insbesondere einen $pK_s$-Wert von höchstens 7,5 aufweisen, und die Anionen der organischen Säuren, die einen $pK_s$-Wert von höchstens 4 aufweisen. Sofern M ein Proton bedeutet, ist der $pK_s$--Wert bevorzugt höchstens 9,5, besonders höchstens 4.

Y in seiner Bedeutung als Wasser kann in den Verbindungen der Formel II an das Kation oder auch Anion koordinativ gebunden sein bzw. als Kristallwasser vorliegen. In manchen Fällen ist es möglich, dass das Wasser nicht ganz entfernt werden kann. Vorzugsweise ist kein Wasser enthalten oder nur sehr wenig.

Y kann auch ein organisches Molekül, das koordinativ gebunden werden kann, vorzugsweise ein Alkohol, Ether, Säureamid, Sulfoxid oder Sulfon, z.B. Methanol, Aethanol, Diethylether, Tetrahydrofuran, Dimethylformamid, Dimethylsulfon oder Tetramethylensulfon sein. Diese Verbindungen können in geringem Umfang in den Komplexverbindungen der Formel II verbleiben, wenn die Herstellung in den entsprechenden Lösungsmitteln erfolgt.

Im allgemeinen können jedoch Wasser und die genannten organischen Moleküle der Formel Y praktisch vollständig entfernt werden, so dass p vorzugsweise ein Wert von 0 bis 1 und insbesondere 0 ist.

Der Wert von q gibt die Anzahl der komplexbildenden Moleküle der Formel I in den Verbindungen der Formel II an, wobei q bevorzugt 1 bis 4, insbesondere 1 oder 2, vor allem 1, ist.

Erfindungsgemässe Verbindungen der Formel II können nach gleichen oder analogen Verfahren hergestellt werden, wie sie in der DE-A-2 330 906, DE-A-2 739 312 und DE-A-2 838 473 beschrieben sind.

Ein weiterer Gegenstand vorliegender Erfindung ist also ein Verfahren zur Herstellung von Komplexverbindungen der Formel II, das dadurch gekennzeichnet ist, dass man a) ein Moläquivalent eines Metallsalzes, Halbmetallsalzes, -hydroxides oder -oxides oder einer Protonensäure der Formel

$$M_n^m X_m^n \cdot p'Y,$$

worin M, X, Y, m und n wie in Formel II definiert sind und p' unabhängig von p einen Wert von 0 bis 10 hat, mit q Moläquivalent einer Verbindung der Formel I umsetzt und ein gegebenenfalls verwendetes Lösungsmittel entfernt, oder b) in einem gemäss a) erhaltenen Produkt mit Hilfe einer Ionenverdrängungsreaktion durch Umsetzung mit einer Verbindung des Kations M bzw. des Anions X das Kation M bzw. das Anion X austauscht, oder c) ein Metallalkoholat bzw. Halbmetallalkoholat von M oder einen Protonensauerstoffsäureester mit q Moläquivalent einer Verbindung der Formel I umsetzt und die erhaltene Komplexverbindung $\alpha$) in stöchiometrischer Menge mit einer Säure der Formel $H_nX^n$ oder mit einem Ammoniumsalz $A_nX^n$,worin A ein Ammoniumkation ist, umsetzt und den (das) entstandene(n) Alkohol, Amin oder Ammoniak entfent, oder $\beta$) mit einer stöchiometrischen Menge eines Säureanhydrids, Säurehalogenids oder Säureesters von Säuren, von denen sich der Rest X ableitet, umsetzt und den entstandenen Alkohol entfernt.

Ausführungsform a) kann man als "Direktverfahren" bezeichnen, da darin das zu komplexierende Salz, Hydroxid, Oxid oder die Säure direkt mit einer Verbindung der Formel I umgesetzt wird. Man kann dabei ohne Lösungsmittel, vorzugsweise aber in einem Lösungsmittel, z.B. in Wasser, wässrig-organischen Systemen oder in organischem Lösungsmittel arbeiten. Die Reaktionstemperatur beträgt vorzugsweise 0 bis 150° C, insbesondere 15 bis 100° C, z.B. 20-50° C. Das verwendete Lösungsmittelsystem wird zweckmässig nach Bildung des Komplexes entfernt, z.B. durch Destillation.

In Ausführungsform b) wird in einem gemäss a) erhaltenen Komplex der Formel II mit Hilfe von Ionenverdrängungsreaktionen ein anderer Komplex hergestellt. Dies ist z.B. dann zweckmässig, wenn das zu komplexierende Salz bzw. die Säure in einem zu verwendenden Lösungsmittelsystem unzureichend löslich ist oder wenn die direkte Komplexbildung nicht zufriedenstellend verläuft. Die Austauschreaktion kann dabei z.B. im Sinne einer Anionenverdrängungsreakton oder einer Neutralisationsreaktion erfolgen. Auf diese Weise kann in einem Komplex der Formel I entweder das Anion X oder das Kation M durch ein

anderes ausgetauscht werden. Reaktionsbedingungen und Reaktionsmedien entsprechen jenen von Ausführungsform a).

Ausführungsform c) kommt insbesondere dann in Frage, wenn die zu komplexierenden Verbindungen eines Kations M in den zu verwendenden Lösungsmitteln ungenügend löslich sind oder die direkte Komplexbildung unbefriedigend verläuft. Man geht dann von einem Alkoholat des Kations M oder von einem Protonensauerstoffsäureester aus. Im erhaltenen Komplex wird dann, wie beschrieben, entweder das Alkoholation oder der Sauerstoffsäureester wie beschrieben ausgetauscht. Die bevorzugten Reaktionsbedingungen entsprechen jenen für die Reaktionen a) und b).

In der Ausführungsform a) setzt man z.B. die wasserfreien Metall- oder Halbmetallsalze oder Protonensäuren direkt mit den komplexierenden Verbindungen der Formel I um. Die Reaktion wird durch Erwärmen beschleunigt. Bei kristallinen Verbindungen der Formel I wählt man zweckmässig eine Reaktionstemperatur, die oberhalb ihrer Schmelzpunkte liegen, sofern kein Lösungsmittel verwendet wird. Die Reaktion ist nach dem Auflösen des eingesetzten Salzes beendet. Danach können eventuelle unlösliche Bestandteile abfiltriert werden. Als Beispiele für wasserfreie Salze seien genannt:
$MgCl_2$, $CaCl_2$, $ZnCl_2$, $SnCl_2$, $SnBr_2$, $MnCl_2$ und $CuCl_2$. Gasförmige Säuren wie HCl oder HBr können in die vorgelegten Verbindungen der Formel I eingeleitet werden.

In einer anderen Ausführungsform werden die kristallwasserhaltigen Metall- oder Halbmetallsalze oder Säuren eingesetzt und mit den komplexbildenden Verbindungen der Formel I umgesetzt. Hierbei kann das Kristallwasser durch Erwärmen, gegebenenfalls im Vakuum, entfernt werden oder durch azeotrope Destillation mit einem organischen Lösungsmittel wie Kohlenwasserstoffen, z.B. Hexan, Heptan, Petroläthern, sowie Benzol, Toluol, Xylol oder Chloroform ausgetrieben werden.

In einer weiteren Ausführungsform des Verfahrens werden die erfindungsgemässen Verbindungen der Formel II erhalten, indem man die wasserfreien oder kristallwasserhaltigen Salze bzw. Säuren in einem geeigneten organischen Lösungsmittel löst und danach eine komplexbildende Verbindung der Formel I zugibt und umsetzt. Nach Entfernung des Lösungsmittels fällt dann das gewünschte Produkt an. Das Kristallwasser wird bei diesem Verfahren im allgemeinen mit dem Lösungsmittel entfernt. Als Lösungsmittel werden bevorzugt jene verwendet, die auch die Verbindung der Formel I zu lösen vermögen. Als Beispiele seien Aether, wie Diäthyläther, Tetrahydrofuran, Alkohole wie Methanol und Aethanol, und Chloroform, Dimethylformamid, Dimethylsulfoxid oder Acetonitril und als Salze KJ, NaBr, $AgNO_3$, $CuSO_4 \cdot 5H_2O$, $Na_2S_2O_3 \cdot 5H_2O$ und $Cd(CH_3COO)_2 \cdot 2H_2O$ genannt.

Bei einer besonderen Ausführungsform des Verfahrens wird zur Herstellung von Komplexverbindungen der Formel II, in denen X für Hydroxyl steht, ein Metallhydroxid oder -oxid bzw. deren Hydrate mit q Molen pro Mol Hydroxid oder Oxid einer komplexbildenden Verbindung der Formel I umgesetzt und anschliessend soviel Wasser ausgetrieben, dass die der Wertigkeit des Metallkations entsprechende Anzahl an Hydroxylgruppen zurückbleibt. Bei der Verwendung der Metalloxide werden wahrscheinlich zunächst unter Austritt von Wasser Alkoholate gebildet, die durch das Reaktionswasser wieder hydrolisiert werden.

Als Medtalloxide und -hydroxide werden hier bevorzugt jene eingesetzt, die in wässriger Lösung $pK_b$-Werte von höchstens 9, vorzugsweise höchstens 4,5 aufweisen, wobei negative Werte sehr starke Basen anzeigen. Als Beispiele seien die Metalloxide und Hydroxide der Alkali- und Erdalkalimetalle, des einwertigen Thalliums und Silbers genannt.

Die Verfahren mit den Protonensäuren sind prinzipiell nicht andersartig. So können die zu komplexierenden Protonensäuren in den Komplexbildner der Formel I direkt eingetragen werden, gegebenenfalls in Gegenwart eines Lösungsmittels wie Kohlenwasserstoffen. Zweckmässig wird hierbei wie bei der Nachreaktion bis zur klaren Lösung gekühlt, um Temperaturen bis zu 50 ° C nicht zu überschreiten. Bei Verwendung verdünnter wässriger Protonensäuren wird vorteilhaft das Wasser in Gegenwart eines Komplexbildners der Formel I durch azeotrope Destillation entfernt, wobei auch Lösungsmittel verwendet werden können.

In den in der Ausführunsform c) verwendeten Verbindungen $H_nX$ und $A_nX$ steht n vorzugsweise für eine ganze Zahl von 1 bis 3 und der $pK_s$--Wert der Säure beträgt höchstens 15,8, vorzugsweise höchstens 7, insbesondere höchsens 4. Zur Erklärung sei erwähnt, dass der $pK_s$--Wert von 15,8 gerade Wasser als schwächste Säure einschliesst.

Die Reaktion kann bei allen Ausführungsformen in Gegenwart eines Lösungsmittels oder ohne durchgeführt werden. Geeignete organische Lösungsmittel sind insbesondere Ether wie Diethylether, Alkohole wie Methanol, Ethanol, vorzugsweise aber Kohlenwasserstoffe wie Pentan, Hexan, Benzol, Toluol und Xylol, die wieder leicht aus dem Reaktionsgemisch durch Destillation, gegebenenfalls im Vakuum, zur Herstellung der reinen erfindungsgemässen komplexierten Verbindungen, entfernt werden können. Vor dem Destillieren können eventuelle unlösliche Bestandteile abfiltriert werden. Weitere Beispiele für Lösungsmittel sind Säureamide, z.B. Dimethylformamid, Dimethylacetamid, Formamid, ferner Sulfoxide und Sulfone, z.B. Dimethylsulfoxid, Dimethylsulfon, Tetramethylsulfon.

Das Verfahren wird zweckmässig bei Umgebungstemperaturen (etwa 20 ° C) bis zu Temperaturen von 150 ° C, vorzugsweise 50 ° C durchgeführt. Bei der Zugabe der Reaktanden (wasserfreie Protonensäure, Säureanhydrid, -ester und -halogenid) wird im allgemeinen eine starke positive Wärmetönung beobachtet. In manchen Fällen kann es daher zweckmässig sein, das Reaktionsgemisch zu kühlen. Zur Entfernung des verwendeten Lösungsmittels ist gegebenenfalls eine Erwärmung notwendig. Für die Ausführungsform b) gelten analoge bevorzugte Reaktionsbedingungen.

Die für die erfindungsgemässe Verfahrensvariante c) als Ausgangsprodukte verwendeten Metall-, Halbmetall- und Metalloxidalkoholate können nach verschiedenen bekannten Verfahren hergestellt werden. Siehe z.B. die Möglichkeiten a) bis h) in der DE-A-2 739 312, Seiten 48 und 49. Weitere Details zur Herstellung der erfindungsgemässen Komplexverbindungen sind der DE-A-2 739 312, Seiten 50-59 zu entnehmen, wobei für "Z" jeweils "Verbindung der Formel I" zu setzen ist. Die angegebenen Seiten werden hiermit als Bestandteil dieser Beschreibung angesehen. Ferner ist zu bedenken, dass die Zahl q in den erfindungsgemässen Komplexverbindungen im allgemeinen kleiner ist als in jenen gemäss DE-A-2 739 312.

Die erfindungsgemässen Komplexverbindungen der Formel II sind von kristalliner, wachsartiger, leichtflüssiger bis viskoser Beschaffenheit, je nachdem, welche Anionen, Kationen und komplexierten Verbindungen der Formel I und in welchem Verhältnis diese enthalten sind. Sie weisen eine bemerkenswert hohe thermische Stabilität auf, die anzeigt, dass die komplexbildenden Verbindungen der Formel I relativ fest gebunden sind. Diese Aussage wird auch durch die Tatsache unterstützt, dass viele Vertreter kristalline Verbindungen sind, die ohne Aenderung ihrer Zusammensetzung aus geeigneten Lösungsmitteln umkristallisiert werden können.

Eine besonders bemerkenswerte Eigenschaft ist die überraschend gute Löslichkeit der erfindungsgemässen Verbindungen der Formel II in vielen organischen Lösungsmitteln, selbst in unpolaren, aprotischen Lösungsmitteln wie den flüssigen Kohlenwasserstoffen. Durch die Wahl und die Anzahl der komplexierenden Verbindungen der Formel I kann die Löslichkeit beeinflusst werden. Auch die Verträglichkeit mit natürlichen und synthetischen Polymeren, Schmierstoffen, Kraftstoffen und hydraulischen Flüssigkeit ist sehr gut.

Die erfindungsgemässen Verbindungen der Formel II weisen sehr gute antistatische und stabilisierende Wirkungen auf.

Gegenstand der vorliegenden Erfindungen sind daher auch Zusammensetzungen enthaltend ein natürliches oder synthetisches Polymer, eine(n) natürliche(n) oder synthetische(n) Schmierstoff, Kraftstoff oder Hydraulikflüssigkeit sowie mindestens eine Komplexverbindung der Formel II.

Beispiele für natürliche oder synthetische Polymere in erfindungsgemässen Zusammensetzungen sind:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.
2. Mischungen der unter 1) genannten Polymeren, z.B. Mischungen von Polypropylen mit Polyisobutylen.
3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.
4. Polystyrol, Poly-(p-methylstyrol).
5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethyle/Propylen-Styrol.
6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von $\alpha,\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern, wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren, wie z.B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellithate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Beispiele für erfindungsgemässe Zusammensetzungen sind z.B. solche, die einen thermoplastischen Kunststoff und mindestens eine Komplexverbindung der Formel II enthalten, sowie solche, die ein Elastomer und mindestens eine Komplexverbindung der Formel II enthalten.

Die erfindungsgemässen Zusammensetzungen enthaltend Polymere aus den oben angegebenen Klassen können zusätzlich auch noch verschiedene herkömmliche Additive enthalten, z.B. neben den weiter oben für die Verwendung der Verbindungen der Formel I genannten Antioxidanten der Klassen 1 bis 9 auch noch die folgenden:

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-,5-Chlor-3',5'-di-tert.butyl-, 5-Chlor-3'-tert.butyl-5'-methyl-,3'-sec.Butyl-5'-tert.butyl, 4'-Octoxy-, 3',5'-Di-tert.-amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Tri-hydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxyβ-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Dioctyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-di-methylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-disubstituierten Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.-butylphenoxy-2,4,8,10-tetraoxa-3,9-diphosphaspiro[5,5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Weitere Beispiele für erfindungsgemässe Zusammensetzungen sind solche, die ein Schmiermittel oder eine Hydraulikflüssigkeit und mindestens eine Komplexverbindung der Formel II enthalten.

Als Schmierstoffe und Hydraulikflüssigkeiten kommen z.B. jene in Betracht, die weiter oben für die Verwendung der Verbindungen der Formel I beschrieben wurden. Die Schmiermittel- und Hydraulikflüssigkeit-Zusammensetzungen können neben den Verbindungen der Formel II zusätzlich andere Additive enthalten, die zugegeben werden, um die Grundeigenschaften von Schmierstoffen noch weiter zu verbessern; dazu gehören: Antioxidantien, Metallpassivatoren, Rostinhibitoren, Viskositätsindex-Verbesserer, Stockpunkterniedriger, Dispergiermittel, Detergentien, Hochdruck-Zusätze und Antiverschleiss-Additive. Beispiele für solche Additive sind vorstehend für die Zusammensetzungen enthaltend Verbindungen der Formel I auf den Seiten 6-11 angeführt.

Die erfindungsgemässen Polymer-, Schmierstoff-, Kraftstoff- und Hydraulikflüssigkeitszusammensetzungen enthalten die Verbindungen der Formel II vorzugsweise in einer Menge von 0,001-15, insbesondere 0,01-10, vor allem 0,01-5, z.B. 0,01-3 Gew.-%.

Gegenstand der vorliegenden Erfindung ist weiter die Verwendung von Komplexverbindungen der Formel II als Stabilisatoren und Antistatika in natürlichen und synthetischen Polymeren sowie natürlichen oder synthetischen Schmierstoffen, Kraftstoffen oder Hydraulikflüssigkeiten.

Bevorzugt ist die Verwendung von Komplexverbindungen der Formel II als Stabilisatoren und Antistatika in thermoplastischen Kunststoffen und Elastomeren, sowie als Hochdruck- und Verschleissschutz-Additive in Schmiermitteln und Hydraulikflüssigkeiten.

Als Stabilisatoren können die erfindungsgemässen Verbindungen der Formel II z.B. als Thermostabilisatoren (Verarbeitungsstabilisatoren) und als Gebrauchsstabilisatoren (z.B. als Antioxidanten) wirken, in Schmiermitteln und Hydraulikflüssigkeiten auch als Hochdruck- und Verschleissschutz-Additive. Die Polymeren, Elastomeren, Schmierstoffe und Hydraulikflüssigkeiten, in denen sie verwendet werden können, sind vorstehend beispielhaft angeführt.

Die nachfolgenden Beispiele dienen der weiteren Erläuterung der vorliegenden Erfindung. Teile und Prozent beziehen sich darin sowie in der übrigen Beschreibung und den Patentansprüchen auf das Gewicht, sofern nichts anderes angegeben ist.

Beispiel 1: Es werden 18,1 g Aminosorbit, 29,2 g 1-($^t$Butylthio)-2,3-epoxypropan und 100 ml Methanol 2 Stunden unter Rühren am Rückfluss erwärmt. Eine leichte Trübung wird durch Klärfiltration abgetrennt und die flüchtigen Anteile am Rotationsverdampfer abdestilliert. Rückstand: 47,0 g (= 99 % d.Th) der Verbindung der Formel

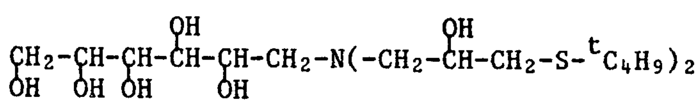

als hochviskose Masse; $n_D^{40}$ : 1,5202

Beispiel 2: 9 g (0.05 Mol) Aminosorbit, 23,8 g (0.11 Mol) 1-($^t$Nonylthio)-2,3epoxypropan und je 20 ml Methanol und Tetrahydrofuran werden bis zur klaren Lösung am Rückfluss (64 °C) erwärmt, eine leichte Trübung durch Filtration abgetrennt, das Gemisch mit 32,8 g Paraffinöl verdünnnt und die flüchtigen Anteile am Rotationsverdampfer abdestilliert. Rückstand: 65,4 g (= 100 % d.Th.) der Verbindung der Formel

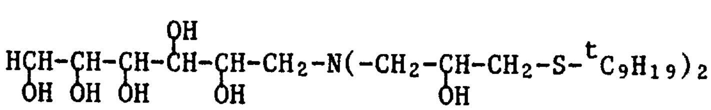

als viskose Flüssigkeit; $n_D^{20}$ : 1,4876

Beispiele 3-9: Analog zu Beispiel 1 werden weitere Verbindungen hergestellt, die in Tabelle 1 zusammengestellt sind.

**Tabelle 1:**

| Beispiel | Formel | Brechungsindex $n_D^{20}$ | Bemerkung |
|---|---|---|---|
| 3 | $HCH(OH)-CH(OH)-CH(OH)-CH(OH)-CH(OH)-CH_2-N(-CH_2-CH(OH)-CH_2-S-{}^tC_{12}H_{25})_2$ | 1,5086 | |
| 4 | $HCH(OH)-CH(OH)-CH(OH)-CH(OH)-CH(OH)-CH_2-N(CH_3)-CH_2-CH(OH)-CH_2-S-{}^tC_{16}H_{33}$ | 1,4825 in Paraf-finöl 1:1 | Produkt: asphaltartige Masse |
| 5 | $HCH(OH)-CH(OH)-CH(OH)-CH(OH)-CH(OH)-CH_2-N(CH_3)-CH_2-CH(OH)-CH_2-S-{}^tC_{12}H_{25}$ | | Produkt: asphaltartige Masse |
| 6 | $HCH(OH)-CH(OH)-CH(OH)-CH(OH)-CH(OH)-CH_2-N(C_2H_5)-CH_2-CH(OH)-CH_2-S-{}^tC_{12}H_{25}$ | 1,4972 | |
| 7 | $HCH(OH)-CH(OH)-CH(OH)-CH(OH)-CH(OH)-CH_2-N(-CH_2-CH(OH)-CH_2-O-{}^iC_8H_{17})_2$ | 1,4734 | |
| 8 | $HCH(OH)-CH(OH)-CH(OH)-CH(OH)-CH(OH)-CH_2-N(-CH_2-CH(OH)-{}^nC_{10}H_{21})_2$ | 1,4728 in Paraf-finöl 1:1 | Produkt: asphaltartige Masse |
| 9 | $HCH(OH)-CH(OH)-CH(OH)-CH(OH)-CH(OH)-CH_2-N(-CH_2-CH(OH)-S-C_2H_5)_2$ | | |

Bei der Herstellung der Verbindungen der Beispiele 4, 5 und 6 wird N-Methyl- bzw. N-Ethyl-aminosorbit und das entsprechende 1-Alkylthio-2,3-epoxypropan in etwa äquimolarer Menge eingesetzt.

Beispiel 10: 3,6 g $NiCl_2 \cdot 6H_2O$ werden in 50 ml Methanol gelöst und mit 10,5 g des Reaktionsproduktes aus Aminosorbit und 1-($^t$Dodecylthio)-2,3-epoxypropan des Beispiels 3 versetzt. Das Lösungsmittel wird unter vermindertem Druck abdestilliert. Anschliessend wird das restliche Kristallwasser mittels Toluol bei 40 °C unter vermindertem Druck quantitativ entfernt. Man erhält als Rückstand 12,5 g der Komplexverbindung der Formel

$$H_2C(OH)-CH(OH)-CH(OH)-CH(OH)-CH(OH)-CH_2-N(CH_2-CH(OH)-CH_2-S-{}^tC_{12}H_{25})_2 \cdot NiCl_2$$

als hellgrüne, harzartige Substanz, die leicht in Heptan und anderen unpolaren Solventien löslich ist. Die 50%/ige Lösung in Paraffinöl weist einen $n_D^{40}$ von 1,4866 auf.

Beispiel 11: Wird in Beispiel 10 an Stelle von $NiCl_2 \cdot 6H_2O$ $CuSO_4 \cdot 5H_2O$ eingesetzt, so erhält man 12,9 g der Komplexverbindung der Formel

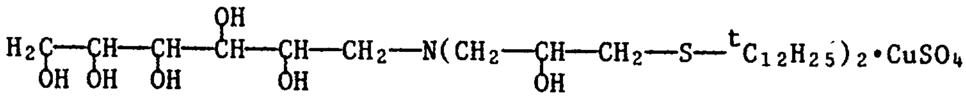

als blaugrüne, glasartige Substanz, die leicht in Heptan und anderen unpolaren Solventien löslich ist. Die 50%ige Lösung in Paraffinöl weist einen $n_D^{40}$ von 1,4836 auf.

Beispiel 12: 10 g $Cu(OOCCH_3)_2 \cdot H_2O$ werden in 50 ml Methanol unter Zusatz von 27,7 g des Reaktionsproduktes aus Aminosorbit und 1-(ⁱOctyloxy)-2,3-epoxypropan des Beispiels 7 gelöst. Anschliessend werden 4,9 g Phosphorsäure zugegeben und das Lösungsmittel im Rotationsverdampfer unter Vakuum abdestilliert. Die restliche freigewordene Essigsäure wird mit Hilfe von Toluol im Vakuum quantitativ entfernt. Man erhält als Rückstand 31,5 g der Verbindung der Formel

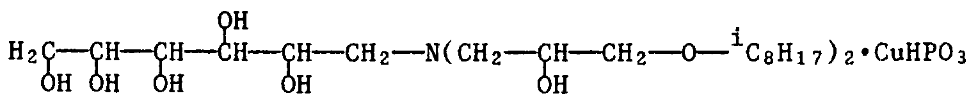

als türkisfarbene, glasartige Substanz, die in Toluol und Xylol leicht löslich ist. Die 50%ige Lösung in Xylol weist einen $n_D^{50}$ von 1,4846 auf.

Bespiel 13: 34,9 g des Reaktionsproduktes aus Aminosorbit und 1-(ᵗDodecylthio)-2,3-epoxypropan des Beispiels 3 werden in 200 ml Toluol gelöst, mit 15,8 g $Ba(OH)_2 \cdot 8H_2O$ versetzt und unter Rühren am Rückfluss 9 ml Kristall- bzw. Reaktionswasser abdestilliert. Anschliessend wird bei 20 °C unter Kühlung eine Mischung aus weiteren 34,9 g des Produktes des Beispiels 3 und 5,8 g Schwefelsäure-Monohydrat zugetropft. Das Gemisch wird 15 Minuten bei 20 °C nachgerührt und das Lösungsmittel unter Vakuum abdestilliert. Man erhält als Rückstand 81 g der Verebindung der Formel

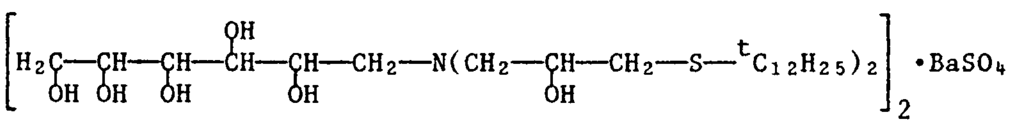

als hochviskose Masse, leicht löslich in Toluol, Xylol und anderen unpolaren Solventen.

Beispiel 14: 2,5 g Orthophosphorsäure werden in 50 ml Methanol gelöst und mit 15,3 g des Reaktionsproduktes aus Aminosorbit und 1-(ᵗNonylthio)-2,3-epoxypropan des Beispiels 2 versetzt. Das Lösungsmittel wird unter vermindertem Druck abdestilliert. Man erhält als Rückstand 17,8 g der Verbindung der Formel

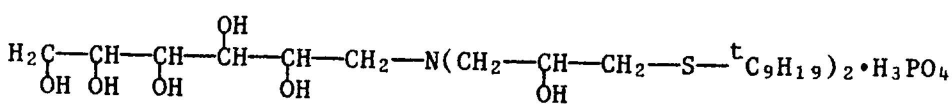

als harzartige Substanz, leicht löslich in Xylol. Die 50%ige Lösung in Xylol weist einen $n_D^{20}$ von 1,5047 auf.

In analoger Weise wird, unter Verwendung des Produktes von Beispiel 3, die Verbindung der Formel

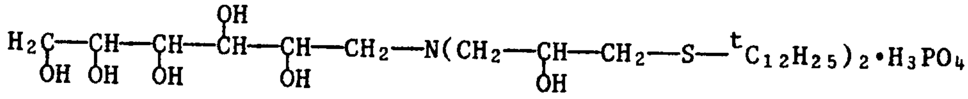

mit einem $n_D^{20}$ der 50%igen Lösung in Xylol von 1,5029 erhalten.

Weitere Verbindungen der Formel II können z.B. auch in Analogie zu den Angaben gemäss DE-A-2 739 312, Seiten 66-71 (Verfahren A-$F_7$) hergestellt werden.

Beispiele für weitere Verbindungen der Formel

$M_n^m \cdot X_m^n \cdot pY$,

die mit Hilfe von Verbindungen der Formel I zu erfindungsgemässen Komplexen der Formel II umgesetzt werden können (z.B. gemäss obigen Beispielen 10-14 oder den vorstehend genannten Verfahren A-$F_7$), sind der Tabelle 1 der DE-A-2 739 312, erste Spalte, Seiten 72-91 (Beispiele 1-204), zu entnehmen.

Anwendungsbeispiel 1: Mit dem Shell-Vierkugel-Apparat (IP 239/73 Extreme pressure and wear lubricant test for oils and greases-four ball-machine) werden folgende Werte bestimmt:

1. W.L. = Weld load (Schweisslast). Das ist die Last, bei der die 4 Kugeln innerhalb von 10 Sekunden zusammenschweissen.
2. W.S.D = Wear Scar Diameter in mm: Das ist der mittlere Verschleissdurchmesser bei einer Belastung von 400 N während 10 min.

Als Testflüssigkeit für die Wirksamkeit der Additive wird ein Basisöl der Viskosität 150 VG 100 verwendet. Die Ergebnisse der Tests sind in Tabelle 2 wiedergegeben.

Tabelle 2:

| Additiv Beispiel Nr. Basisöl ohne Additiv | Konzentration (Gew.-%) - | WL [N] 1450 | WSD [mm] 0,85 |
|---|---|---|---|
| 3 | 0,25 | | 0,45 |
| | 1,0 | 1700 | 0,45 |
| | 2,5 | | 0,45 |
| | 5,0 | 1900 | 0,45 |
| 4 | 0,25 | 1700 | 0,50 |
| | 1,0 | 1800 | 0,50 |

Anwendungsbeispiel 2: Mit der im Anwendungsbeispiel 1 geschilderten Apparatur werden die WL- und WSD-Werte für Wasser, welches mit Triethylamin auf pH 8,5 eingestellt ist, in Anwesenheit und in Abwesenheit eines Additivs der Formel I bestimmt.

Die Ergebnisse der Tests sind in Tabelle 3 wiedergegeben.

Tabelle 3:

| Additiv Beispiel Nr. | Konzentration Additiv (Gew.-%) | Konzentration Triethylamin (Gew.-%) | pH | WL (N) | WSD (nm) |
|---|---|---|---|---|---|
| Wasser ohne Additiv | - | 0,6 | 8,5 | <1200 | >1,5 |
| 1 | 2,5 | 0,6 | 8,5 | 1900 | 0,75 |

Die Verbindungen gemäss Beispielen 1, 2 und 5-9 ergeben in den Tests der Anwendungsbeispiele 1 und 2 ähnlich gute Ergebnisse. Auch die Verbindungen der Beispiele 10 bis 14 zeigen insbesondere in den Tests gemäss Anwendungsbeispiel 1 sehr gute WL- und WSD-Werte.

## Patentansprüche

1. Zusammensetzungen, enthaltend ein Schmiermittel oder eine Hydraulikflüssigkeit und wenigstens eine Verbindung der allgemeinen Formel I

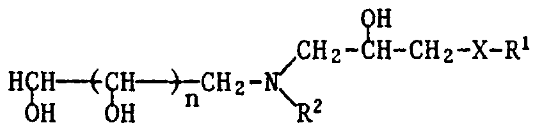

(I),

worin n 2, 3 oder 4 ist, X -S-, -O-, -O-CO- oder $-CH_2-$ ist, $R^1$ $C_1$-$C_{22}$-Alkyl, $C_5$-$C_6$-Cycloalkyl oder Phenyl bedeutet und $R^2$ Wasserstoff, $C_1$-$C_8$-Alkyl, durch eine OH-Gruppe substituiertes $C_2$-$C_4$-Alkyl oder eine Gruppe $-CH_2-CH(OH)-CH_2-X-R^1$ ist, worin X und $R^1$ die angegebene Bedeutung haben.

**2.** Zusammensetzungen gemäss Anspruch 1, enthaltend eine Verbindung der Formel I, worin X -S-, $-CH_2-$ oder -O- ist, $R^1$ geradkettiges oder verzweigtes $C_5$-$C_{16}$-Alkyl darstellt, $R^2$ für Methyl, Ethyl oder die Gruppe $-CH_2-CH(OH)-CH_2-X-R^1$ steht, wobei X und $R^1$ die angegebene Bedeutung haben, und n 4 ist.

**3.** Zusammensetzungen gemäss Anspruch 1, enthaltend eine Verbindung der Formel I, worin X -S- bedeutet.

**4.** Zusammensetzungen gemäss Anspruch 1, enthaltend eine Verbindung der Formel I, worin $R^2$ eine Gruppe der Formel $-CH_2-CH(OH)-CH_2-X-R^1$ bedeutet.

**5.** Verbindungen der Formel Ia

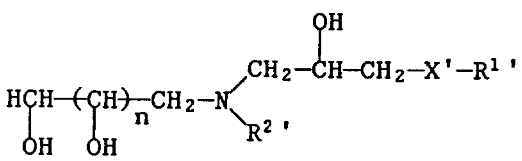

(Ia),

worin n 2, 3 oder 4 ist, X' die Bedeutung -S-, -O- oder -O-CO- hat, $R^{1'}$ für $C_1$-$C_{22}$-Alkyl steht und $R^{2'}$ eine Gruppe $-CH_2-CH(OH)-CH_2-X'-R^{1'}$, worin X' und $R^{1'}$ die angegebene Bedeutung haben, oder, falls X' -S- bedeutet, auch Wasserstoff, $C_1$-$C_8$-Alkyl oder durch eine OH-Gruppe substituiertes $C_2$-$C_4$-Alkyl darstellt.

**6.** Verbindungen gemäss Anspruch 5, worin X'-S- bedeutet.

**7.** Verbindungen gemäss Anspruch 5, worin $R^{2'}$ eine Gruppe der Formel $-CH_2-CH(OH)-CH_2-X-R^{1'}$ bedeutet.

**8.** Verwendung von Verbindungen der Formel (I) gemäss Anspruch 1 oder 5 als amphipolare Liganden zur lipophilen Modifizierung (Komplexierung) von an sich hydrophilen Metall- und Halbmetallsalzen, -hydroxiden und -oxiden und von Protonensäuren.

**9.** Komplexverbindungen eines Metallsalzes, Halbmetallsalzes, -hydroxides oder -oxides oder einer Protonensäure der allgemeinen Formel II oder deren Mischungen

$$M_n^m \cdot X_m^n \cdot pY \cdot qZ \quad (II)$$

worin
M ein m-wertiges Kation eines Metalls oder Halbmetalls oder ein Metalloxy- oder Metalldioxykation oder ein Proton darstellt,
X ein n-wertiges Anion einer n-basischen anorganischen Protonensäure oder einer n-basischen organischen Säure aus der Gruppe der aliphatischen und cycloaliphatischen Carbonsäuren mit bis zu 8 C-Atomen, die durch Halogen- und/oder Hydroxylgruppen substituiert sein können, der aromatischen Mono-, Di- und Tricarbonsäuren, die durch Hydroxyl-, Halogen- und/oder Nitrogruppen substituiert sein können, der organischen Sauerstoffsäuren des Phosphors und Schwefels, der organischen Thiosäuren des Phosphors und aus der Gruppe der Merkaptane, bedeutet, wobei die anorganische oder organische

Säure einen $pK_s$-Wert von höchstens 15,8 und, wenn M ein Proton ist, von höchstens 11 aufweist, oder $X^n$ -OH oder 0 ist,
Y Wasser oder ein neutrales organisches Molekül ist, das von dem Kation oder auch Anion koordinativ gebunden werden kann,
Z eine Verbindung der Formel I bedeutet,
p für einen Wert von 0 bis 2,
q für einen Wert von 1 bis 8,
m für eine ganze Zahl von 1 bis 6 und
n für eine ganze Zahl von 1 bis 4 stehen.

**10.** Verbindungen gemäss Anspruch 9, worin sich das Anion von anorganischen Protonensäuren aus der Gruppe der Halogen- oder Pseudohalogenwasserstoffsäuren und Selenwasserstoffsäuren, der anorganischen Sauerstoffsäuren oder Thiosäuren, und der anorganischen Komplexsäuren mit Acidoliganden ableitet.

**11.** Verbindungen gemäss Anspruch 9, worin X Oxid, Hydroxy, Fluorid, Bromid, Jodid, Cyanid, Sulfid, Hydrogensulfid, Nitrat, Sulfit, Sulfat, Hydrogensulfat, Phosphat, Phosphit, Hydrogenphosphat, Metaphosphat, Polyphosphat, Carbonat, Hydrogencarbonat, Silikat, Metasilikat, Formiat, Acetat oder Oxalat, insbesondere Chlorid, Hydrogenphosphat, Phosphat oder Sulfat bedeutet.

**12.** Verbindungen gemäss Anspruch 9, worin M Wasserstoff, Na, K, Mg, Ca, Sr, Ba, Al, Cr, Mn, Fe, Co, Ni, Cu, Ag, Zn, Cd, Hg, Sn, Pb, B oder Si, vorzugsweise Wasserstoff, Ca, Ba, Cu, Ni, Fe oder Co ist.

**13.** Verbindungen gemäss Anspruch 9, worin Y ein Alkohol, Ether, Säureamid, Sulfoxid oder Sulfon ist.

**14.** Verbindungen gemäss Anspruch 9, worin p null ist.

**15.** Verbindungen gemäss Anspruch 9, worin q einen Wert von 1 bis 4, vorzugsweise den Wert 1 oder 2 hat.

**16.** Verbindungen gemäss Anspruch 9, worin Z eine Verbindung der Formel I ist, worin n 4, X -S- und $R^2$ eine Gruppe der Formel $-CH_2-CH(OH)-CH_2-X-R^1$ bedeuten.

**17.** Verfahren zur Herstellung von Komplexverbindungen der in Anspurch 9 definierten Formel II, dadurch gekennzeichnet, dass man a) ein Moläquivalent eines Metallsalzes, Halbmetallsalzes, -hydroxides oder -oxides oder einer Protonensäure der Formel

$$M_n^m X_m^n \cdot p'Y,$$

worin M, X, Y, m und n wie in Anspruch 9 definiert sind und p' unabhängig von p einen Wert von 0 bis 10 hat, mit q Moläquivalent einer Verbindung der Formel I umsetzt und ein gegebenenfalls verwendetes Lösungsmittel entfernt, oder b) in einem gemäss a) erhaltenen Produkt mit Hilfe einer Ionenverdrängungsreaktion durch Umsetzung mit einer Verbindung des Kations M bzw. des Anions X das Kation M bzw. das Anion X austauscht, oder c) ein Metallalkoholat bzw. Halbmetailalkoholat von M oder einen Protonensauerstoffsäureester mit q Moläquivalent einer Verbindung der Formel I umsetzt und die erhaltene Komplexverbindung $\alpha$) in stöchiometrischer Menge mit einer Säure der Formel $H_nX^n$ oder mit einem Ammoniumsalz $A_nX^n$,worin A ein Ammoniumkation ist, umsetzt und den (das) entstandenen Alkohol, Amin oder Ammoniak entfernt, oder $\beta$) mit einer stöchiometrischen Menge eines Säureanhydrids, Säurehalogenids oder Säureesters von Säuren, von denen sich der Rest X ableitet, umsetzt und den entstandenen Alkohol entfernt.

**18.** Zusammensetzung enthaltend ein natürliches oder synthetisches Polymer, eine(n) natürliche(n) oder synthetische(n) Schmierstoff, Kraftstoff oder Hydraulikflüssigkeit sowie mindestens eine der in Anspruch 9 definierten Komplexverbindungen der Formel II.

**19.** Zusammensetzung gemäss Anspruch 18, enthaltend ein Schmiermittel oder eine Hydraulikflüssigkeit und mindestens eine Komplexverbindung der Formel II.

20. Zusammensetzung gemäss Anspruch 18, enthaltend einen thermoplastischen Kunststoff oder ein Elastomer und mindestens eine Komplexverbindung der Formel II.

21. Verwendung von Komplexverbindungen der in Anspruch 9 definierten Formel II als Stabilisatoren und Antistatika in natürlichen und synthetischen Polymeren sowie natürlichen oder synthetischen Schmierstoffen, Kraftstoffen oder Hydraulikflüssigkeiten.

22. Verwendung nach Anspurch 21 als Stabilisatoren und Antistatika in thermoplastischen Kunststoffen und Elastomeren.

23. Verwendung nach Anspruch 21 als Hochdruck- und Verschleissschutz-Additive in Schmiermitteln und Hydraulikflüssigkeiten.

## Claims

1. A composition comprising a lubricant or a hydraulic fluid and at least one compound of the general formula I

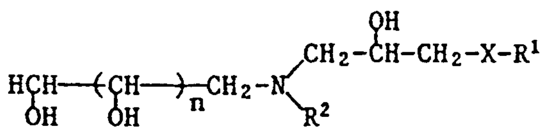

(I)

in which n is 2, 3 or 4, X is -S-, -O-, -O-CO- or $-CH_2-$, $R^1$ is $C_1$-$C_{22}$alkyl, $C_5$-$C_6$cycloalkyl or phenyl, and $R^2$ is hydrogen, $C_1$-$C_8$alkyl, $C_2$-$C_4$alkyl which is substituted by an OH group, or a group $-CH_2CH(OH)-CH_2-X-R^1$, in which X and $R^1$ have the given meanings.

2. A composition according to claim 1 comprising a compound of the formula I, in which X is -S-, $-CH_2-$, or -O-, $R^1$ is straight-chain or branched $C_5$-$C_{16}$alkyl, $R^2$ is methyl, ethyl or the group $-CH_2-CH(OH)-CH_2-X-R_1$, where X and $R^1$ have the given meanings and n is 4.

3. A composition according to claim 1 comprising a compound of the formula I, in which X is -S-.

4. A composition according to claim 1 comprising a compound of the formula I, in which $R^2$ is a group of the formula $-CH_2-CH(OH)-CH_2-X-R_1$.

5. A compound of the formula Ia

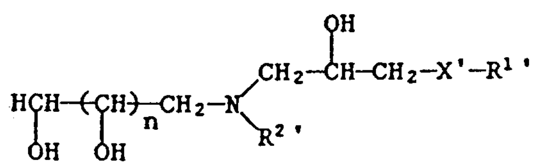

(Ia)

in which n is 2, 3 or 4, X' is -S-, -O- or -O-CO-, $R^{1'}$ is $C_1$-$C_{22}$alkyl and $R^{2'}$ is a group $-CH_2-CH(OH)-CH_2-X'-R^{1'}$, in which X' and $R^{1'}$ have the given meanings or, if X' is -S-, also hydrogen, $C_1$-$C_8$alkyl, or $C_2$-$C_4$alkyl which is substituted by an OH group.

6. A compound according to claim 5, in which X' is -S-.

7. A compound according to claim 5, in which $R^{2'}$ is a group of the formula $-CH_2CH(OH)-CH_2-X-R^{1'}$.

8. Use of a compound of the formula (I) according to either claim 1 or claim 5 as amphipolar ligand for lipophilic modification (complexing) of intrinsically hydrophilic metal and semi-metal salts, metal and semi-metal hydroxides, metal and semi-metal oxides and of protic acids.

**9.** A complex compound of a metal salt, semi-metal salt, metal or semi-metal hydroxide, metal or semi-metal oxide or of a protic acid of the general formula II

$M_n^m \cdot X_m^n \cdot pY \cdot qZ$ (II)

in which
M is a cation of valency m of a metal or semi-metal or is an oxymetal or dioxymetal cation or a proton,
X is an anion of valency n of an n-basic inorganic protic acid or of an n-basic organic acid selected from the group consisting of aliphatic and cycloaliphatic carboxylic acids containing up to 8 carbon atoms and which may be substituted by halogen and/or hydroxyl groups, of aromatic mono-, di- and tricarboxylic acids which may be substituted by hydroxyl, halogen and/or nitro groups, of organic oxyacids of phosphorus and sulfur, of organic thioacids of phosphorus, and from the group of the mercaptans, said inorganic or organic acid having a $pK_a$ value of not more than 15.8 and, if M is a proton, of not more than 11, or $X^n$ is -OH or O,
Y is water or a neutral organic molecule which forms a co-ordinate bond with the cation or with the anion,
Z is a compound of the formula I,
p is a value from 0 to 2,
q is a value from 1 to 8,
m is an integer from 1 to 6, and
n is an integer from 1 to 4.

**10.** A compound according to claim 9, in which the anion is derived from inorganic protic acids selected from the group consisting of hydrohalic acids or pseudohydrohalic acids and hydroselenic acids, of inorganic oxyacids and thioacids, and of the inorganic complex acids with acidoligands.

**11.** A compound according to claim 9, in which X is oxide, hydroxyl, fluoride, bromide, iodide, cyanide, sulfide, hydrosulfide, nitrate, sulfite, sulfate, bisulfate, phosphate, phosphite, hydrogenphosphate, metaphosphate, polyphosphate, carbonate, bicarbonate, silicate, metasilicate, formate, acetate or oxalate, especially chloride, hydrogenphosphate, phosphate or sulfate.

**12.** A compound according to claim 9, in which M is hydrogen, Na, K, Mg, Ca, Sr, Ba, Al, Cr, Mn, Fe, Co, Ni, Cu, Ag, Zn, Cd, Hg, Sn, Pb, B or Si, preferably hydrogen, Ca, Ba, Cu, Ni, Fe or Co.

**13.** A compound according to claim 9, in which Y is an alcohol, an ether, an acid amide, a sulfoxide or a sulfone.

**14.** A compound according to claim 9, in which p is zero.

**15.** A compound according to claim 9, in which q is a value from 1 to 4, preferably 1 or 2.

**16.** A compound according to claim 9, in which Z is a compound of the formula I, in which n is 4, X is -S- and $R^2$ is a group of the formula $-CH_2-CH(OH)-CH_2-X-R^1$.

**17.** A process for the preparation of a complex compound of the formula II as defined in claim 9, which comprises reacting a) one molar equivalent of a metal salt, semi-metal salt, metal or semi-metal hydroxide, metal or semi-metal oxide, or of a protic acid of the formula

$M_n^m \cdot X_m^n \cdot p'Y$

in which M, X, Y, m and n are as defined in claim 9, and p' independently of p is a value from 0 to 10, with q molar equivalents of a compound of the formula I, and removing any solvent employed, or b) reacting the product obtained according to a) with a compound of the cation M or of the anion X to replace the cation M or anion X by another cation or anion by means of an ion substitution reaction, or c) reacting a metal alcoholate or semi-metal alcoholate of M or a protic oxyacid ester with q molar equivalents of a compound of the formula I and reacting the resultant complex compound $\alpha$) in stoichiometric proportion with an acid of the formula $H_nX^n$ or with an ammonium salt $A_nX^n$, in which A is an ammonium cation, and removing the alcohol, amine or ammonia which has formed, or $\beta$) with a

stoichiometric amount of an acid anhydride, acid halide or acid ester of an acid from which the radical X is derived, and removing the alcohol which has formed.

**18.** A composition comprising a natural or synthetic polymer, a natural or synthetic lubricant, fuel or hydraulic fluid, and at least one complex compound of the formula II as defined in claim 9.

**19.** A composition according to claim 18 comprising a lubricant or a hydraulic fluid and at least one complex compound of the formula II.

**20.** A composition according to claim 18 comprising a thermoplastic or an elastomer and at least one complex compound of the formula II.

**21.** Use of a complex compound of the formula II as defined in claim 9 as stabiliser and antistatic agent for natural and synthetic polymers as well as for natural or synthetic lubricants, fuels or hydraulic fluids.

**22.** Use according to claim 21 as stabiliser and antistatic agent for thermoplastics and elastomers.

**23.** Use according to claim 21 as extreme pressure and antiwear additive for lubricants and hydraulic fluids.

**Revendications**

**1.** Compositions, contenant un lubrifiant ou un fluide hydraulique et au moins un composé de formule générale I

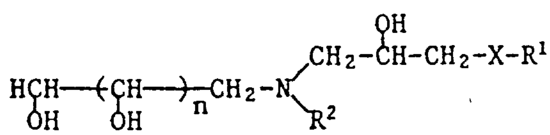

(I),

dans laquelle n vaut 2,3 ou 4; X représente -S-, -O-, -O-CO-ou $-CH_2-$, $R^1$ représente un groupe alkyle en $C_1$ à $C_{22}$, cycloalkyl en $C_5$ ou $C_6$ ou un groupe phényle, et $R^2$ représente un atome d'hydrogène, un groupe alkyle en $C_1$ à $C_8$, un groupe alkyle en $C_2$ à $C_4$ substitué par un groupe OH, ou un groupe $-CH_2-CH(OH)-CH_2-X-R^1$, dans lequel X et $R^1$ ont le sens indiqué ci-dessus.

**2.** Compositions selon la revendication 1, contenant un composé de formule I, dans laquelle X représente-S-, $-CH_2-$ ou -O-; $R^1$ représente un groupe alkyle en $C_5$ à $C_{16}$, linéaire ou ramifié; $R^2$ représente un groupe méthyle, éthyle ou le groupe $-CH_2-CH(OH)-CH_2-X-R^1$, dans lequel X et $R^1$ ont le sens indiqué, et n vaut 4.

**3.** Compositions selon la revendication 1, contenant un composé de formule 1, dans laquelle X représente -S-.

**4.** Compositions selon la revendication 1, contenant un composé de formule I dans laquelle $R^2$ représente un groupe de formule $-CH_2-CH(OH)-CH_2-X-R^1$.

**5.** Composés de formule Ia

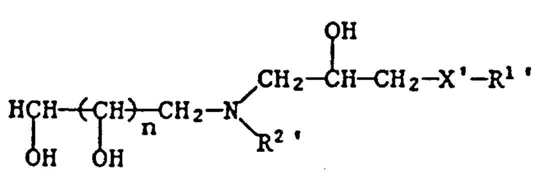

(Ia),

dans laquelle n vaut 2,3, ou 4; X' représente -S-, -O- ou - O-CO-; $R^{1'}$ représente un groupe alkyle en $C_1$ à $C_{22}$ et $R^{2'}$ représente un groupe $-CH_2-CH(OH)-CH_2-X'-R^{1'}$, dans lequel X' et $R^{1'}$ ont le sens indiqué ou bien, si X' représente -S-. il peut également représenter un atome d'hydrogène, un groupe alkyle en

$C_1$ à $C_8$ ou un groupe alkyle en $C_2$ à $C_4$ substitué par un groupe OH.

**6.** Composés selon la revendication 5, dans lesquels X' représente -S-

**7.** Composés selon la revendication 5, dans lesquels $R^{2'}$ représente un groupe de formule-$CH_2$-CH(OH)-$CH_2$-X'-$R^{1'}$.

**8.** Utilisation de composés de formule (I) selon la revendication 1 ou 5, comme ligands ou coordinats amphipolaires pour une modification liphophile (une complexation) de sels, d'hydroxydes et d'oxydes de métaux et de métalloïdes, et d'acides protoniques, ces derniers composés étant de nature hydrophile.

**9.** Composés complexes d'un sel de métal, d'un sel de métalloïde, d'un hydroxyde ou oxyde de métal ou de métalloïde, ou d'un acide protonique de formule générale II ou de leurs mélanges

$$M_n^m \cdot X_m^n \cdot pY.\ qZ \qquad (II)$$

formule dans laquelle :

M représente un cation de valence m d'un métal ou d'un métalloïde ou un cation de type métaloxy ou métaldioxy ou un proton,

X représente un anion de valence n, d'un acide protonique minéral de basicité n (comportant n groupes acides) ou d'un acide organique de basicité n (comportant n groupes acides), choisi dans l'ensemble constitué par les acides carboxyliques aliphatiques et cycloaliphatiques ayant jusqu'à 8 atomes de carbone, qui peuvent être substitués par de l'halogène et/ou par des groupes hydroxyles, des acides aromatiques mono-,di- ou tri-carboxyliques, qui peuvent être substitués par des groupes hydroxyles halogéno/ou nitro, des acides oxygénés organiques du phosphore et du soufre, des thioacides organiques du phosphore et dans le groupe des mercaptans, l'acide minéral ou l'acide organique présentant une valeur de $PK_a$ d'au maximum 15,8, et, lorsque M est un proton, d'au maximum 11, ou bien X représente $X^n$-OH ou 0,

Y représente de l'eau ou une molécule organique neutre, qui peut être fixée par coordination par le cation ou également par l'anion,

Z représente un composé de formule I,

p a une valeur de 0 à 2,

k a une valeur de 1 à 8,

m est un nombre entier valant 1 à 6,

n est un nombre entier valant 1 à 4.

**10.** Composés selon la revendication 9, dans le cas desquels l'anion des acides protoniques minéraux provient du groupe des hydracides halogénés ou des pseudohydracides halogénés et , des acides hydrogénés du sélénium, des acides oxygénés minéraux ou de thioacides, et des acides complexes minéraux avec des ligands acides.

**11.** Composés selon la revendication 9, dans lesquels X représente un anion oxyde, hydroxy, fluorure, bromure, iodure, cyanure, sulfure, hydrogénosulfure, nitrate, sulfite, sulfate, hydrogénosulfate, phosphate, phosphite, hydrogénophosphate, métaphosphate, polyphosphate, carbonate, hydrogénocarbonate, silicate, métasilicate, formiate, acétate ou oxalate, en particulier chlorure, hydrogénophosphate, phosphate ou sulfate.

**12.** Composés selon la revendication 9 dans lesquels représente un atome d'hydrogène ou de Na, K, Mg, Ca, Sr, Ba, Al, Cr, Mn, Fe, Co, Ni, Cu, Ag, Zn, Cd, Hg, Sn, Pb B ou Si, avantageusement un atome d'hydrogène, de Ca, Ba, Cu, Ni, Fe, ou CO.

**13.** Composés selon la revendication 9, dans lequels Y représente un alcool, un éther, un amide d'acide, un sulfoxyde ou une sulfone.

**14.** Composés selon la revendication 9, dans lesquels p est nul.

**15.** Composés selon la revendication 9, dans lesquels q a une valeur de 1 à 4, et vaut avantageusement 1 ou 2.

**16.** Composés selon la revendication 9, dans lesquels Z représente un composé de formule I, dans laquelle n vaut 4, X représente -S- et $R^2$ représente un groupe de formule $-CH_2-CH(OH)-CH_2-X-R^1$.

**17.** Procédés pour préparer des composés complexes répondant à la formule II définie à la revendication 9, procédé caractérisé en ce que :

a) on fait réagir un équivalent molaire d'un sel de métal, d'un sel de métalloïde, d'un hydroxyde ou oxyde de métalloïde ou d'un acide protonique de formule

$$M_n^m X_m^n \bullet p'Y,$$

(dans laquelle L, X, Y, m et n ont la définition indiquée à la revendication 9; et p' vaut, indépendament de p, 0 à 10) avec q équivalents molaires d'un composé de formule I, et l'on élimine un solvant éventuellement utilisé; ou bien (b) on remplace, dans un produit obtenu selon (a) et en opérant à l'aide d'une réaction d'expulsions d'ions, par réaction avec un composé du cation M ou de l'anion X, ou bien (c) on fait réagir un alcoolate de métal ou un alcoolate de métalloïde dérivant de M ou un ester d'un acide oxygéné protonique avec q équivalents molaires d'un composé de formule I, et l'on fait réagir le composé complexe ainsi obtenu ($\alpha$) en une quantité stoéchiométrique avec un acide de formule $H_nX^n$ ou avec un sel d'ammonium $A_nX^n$, formules dans lesquelles A représente un cation ammonium, et l'on élimine l'alcool, l'amine ou l'ammoniac résultant, ou bien ($\beta$) on le fait réagir avec une quantité stoechiométrique d'un anhydride d'acide, d'un halogénure d'acide ou d'un ester d'acide dont le reste X dérive, et l'on élimine l'alcool résultant.

**18.** Composition contenant un polymère naturel ou synthétique, un lubrifiant naturel ou synthétique, un carburant ou un fluide hydraulique, ainsi qu'au moins l'un des composés complexes de formule II défini à la revendication 9.

**19.** Composition selon la revendication 18, contenant un lubrifiant ou un fluide hydraulique et au moins un composé complexe de formule II.

**20.** Composition selon la revendication 18, contenant une matière thermoplastique ou un élastomère et au moins un composé complexe de formule II.

**21.** Utilisation de composés complexes répondant à la formule II définie à la revendication 9, à titre de stabilisant et d'agent anti-électricité statique dans des polymères naturels et synthétiques ainsi que dans des lubrifiants naturels ou synthétiques, des carburants ou des fluides hydrauliques.

**22.** Utilisation selon la revendication 21, à titre de stabilisants, et d'agents anti-électricité statique dans des matières thermoplastiques et dans des élastomères.

**23.** Utilisation selon la revendication 21 comme additif dans des lubrifiants et dans des fluides hydrauliques, pour leur conférer un bon comportement de résistance aux pressions élevées et de protection contre l'usure.